# EUROPÄISCHE PATENTSCHRIFT

(11) **EP 1 176 430 B1**
(45) Veröffentlichungstag und Bekanntmachung des Hinweises auf die Patenterteilung: **10.09.2008**
(21) Anmeldenummer: 01116180.9
(22) Anmeldetag: 04.07.2001
(51) Int. Cl.: G01S 17/10, G01S 7/497

(54) **Optoelektronische Vorrichtung**
Optoelectronic device
Dispositif optoélectronique

(30) Priorität: 27.07.2000 DE 10036538
(43) Veröffentlichungstag der Anmeldung: 30.01.2002
(73) Patentinhaber: Leuze electronic GmbH + Co. KG, 73277 Owen/Teck (DE)
(72) Erfinder: Wörner, Jörg, 73235 Weilheim/Teck (DE)
(74) Vertreter: Ruckh, Rainer Gerhard

(56) Entgegenhaltungen:
- EP-A- 0 933 649
- DE-A- 2 723 835
- DE-A- 19 513 823
- DE-A- 19 520 167
- DE-A- 19 607 345
- DE-A- 19 709 906

## Beschreibung

Die Erfindung betrifft eine optoelektronische Vorrichtung gemäß dem Oberbegriff des Anspruchs 1.

Eine derartige optoelektronische Vorrichtung ist aus der DE 43 41 080 C1 bekannt. Die optoelektronische Vorrichtung weist zur Ortung von Objekten in einem Überwachungsbereich einen Sendelichtstrahlen emittierenden Sender und einen als ortsauflösenden Detektor ausgebildeten Empfangslichtstrahlen empfangenden Empfänger auf, welche in einem gemeinsamen Gehäuse integriert sind. Die Sendelichtstrahlen werden über eine Ablenkeinheit abgelenkt und so periodisch innerhalb eines Überwachungsbereichs geführt. Die Distanzbestimmung von Objekten im Überwachungsbereich erfolgt mittels einer Phasenmessung. Anhand der Phasenmessung wird die Laufzeitdifferenz der von einem Objekt reflektierten Empfangslichtstrahlen bezüglich der vom Sender emittierten Sendelichtstrahlen ermittelt.

Außerhalb des Überwachungsbereichs ist im Innern des Gehäuses ein Testobjekt angeordnet. Die vom Testobjekt als Empfangslichtstrahlen zum Empfänger zurückreflektierten Sendelichtstrahlen werden in einer Auswerteeinheit zur Funktionsüberprüfung der optoelektronischen Vorrichtung hinsichtlich ihrer Amplitude ausgewertet.

Damit ist beispielsweise überprüfbar ob der Sender oder der Empfänger funktionsfähig sind. Auch können aufgrund von Alterungen oder Verschmutzungen von Bauteilen hervorgerufene Störungen mit der Testmessung gegen das Testobjekt erfasst werden.

Jedoch gibt die Testmessung gegen das Testobjekt keinen Aufschluss darüber, ob die Distanzmessung zur Ortung der Objekte im Überwachungsbereich fehlerfrei erfolgt. Erst recht können eventuell auftretende Fehler bei der Distanzmessung durch die Testmessung nicht beseitigt werden.

Die DE 27 23 835 A betrifft einen Laserentfemungsmesser nach dem Prinzip der Laufzeitmessung eines Lichtimpulses mittels zweier Kanäle, wobei der eine Kanal als Referenzkanal zur Gewinnung des Startsignals und der andere Kanal als Messkanal zur Gewinnung des Stopsignals dient.

Das von einer Laserdiode emittierte Sendelicht wird an einer Senderlinse teilweise aufgestreut. Der gestreute Teil des Sendelichts gelangt in den Referenzkanal, das restliche Sendelicht in den Messkanal.

Die aus der DE 196 07 345 A1 bekannte Laserabstandsermittlungsvorrichtung umfasst einen Impulslaser, eine Lichtablenkeinrichtung, eine einen optoelektronischen Photoempfänger aufweisende Photoempfangsanordnung sowie eine Steuer- und Auswerteelektronik, in der nach dem Impulslaufzeitverfahren aus der Zeit zwischen dem Aussenden und dem Empfang eines Lichtimpulses unter Berücksichtigung der Lichtgeschwindigkeit ein für den Abstand eines Objekts repräsentatives Abtastsignal ermittelt wird.

Der Erfindung liegt die Aufgabe zugrunde eine optoelektronische Vorrichtung der eingangs genannten Art so auszubilden, dass eine möglichst genaue und überprüfbare Erfassung von Objekten im Überwachungsbereich gewährleistet ist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße optoelektronische Vorrichtung weist einen nach dem Impulslaufzeitverfahren arbeitenden Distanzsensor auf. Durch die Bestimmung der Laufzeit tₒ der vom Sender emittierten und der von Objekten innerhalb des Überwachungsbereichs auf den Empfänger des Distanzsensors als Empfangslichtimpuls zurückreflektierten Sendelichtimpulse werden die Distanzen der Objekte zur optoelektronischen Vorrichtung bestimmt.

Erfindungsgemäß wird aus den Sendelichtimpulsen jeweils ein Teil der Lichtmenge als Referenz-Sendelichtimpuls ausgekoppelt und über eine Referenzstrecke zum Empfänger geführt.

In der Auswerteeinheit der optoelektronischen Vorrichtung wird die Laufzeit t_{R} des als Referenz-Empfangslichtimpuls auf den Empfänger geführten Referenz-Sendelichtimpuls bestimmt. Dann wird zur Distanzbestimmung eines Objektes die Laufzeitdifferenz tₒ - t_{R} herangezogen.

Die Sendelichtimpulse sind mittels einer Ablenkeinheit periodisch innerhalb des Überwachungsbereichs geführt und für jede Ablenkposition der Ablenkeinheit von einem in den Überwachungsbereich geführten Sendelichtimpuls ist ein Referenz-Sendelichtimpuls ausgekoppelt.

Die optoelektronische Vorrichtung ist in einem Gehäuse integriert und an der Ablenkeinheit abgelenkte Sendelichtimpulse sind über ein im Gehäuse integriertes Austrittsfenster in den Überwachungsbereich geführt.

Am Austrittsfenster ist eine Reflexionsfläche angeordnet, an welcher jeweils ein Teil der Lichtmenge der Sendelichtimpulse als Referenz-Sendelichtimpuls zum Empfänger reflektiert wird.

Der Grundgedanke der Erfindung besteht somit darin, sämtliche mit den Sendelichtimpulsen durchgeführte Distanzmessungen auf jeweils eine mit dem Referenz-Sendelichtimpuls durchgeführte Referenzmessung zu beziehen, wobei die Länge der Referenzstrecke vorbekannt und vorteilhaft in der Auswerteeinheit abgespeichert ist.

Durch die Auswertung der Laufzeitdifferenz tₒ - t_{R} werden interne, bei der Distanzmessung auftretende Messfehler weitgehend eliminiert. Eine Ursache für derartige Messfehler ist darin begründet, dass auf die Ansteuerung des Senders durch einen Triggerimpuls oder dergleichen nicht zeitgleich die Emission eines Sendelichtimpulses erfolgt. Vielmehr erfolgt die Emission des Sendelichtimpulses aufgrund der endlichen Laufzeiten der elektrischen Signale in den einzelnen Bauteilen etwas verzögert, wobei diese Laufzeiten Schwankungen infolge von Temperaturschwankungen, Betriebsspannungsschwankungen oder infolge von Alterungen von Bauteilen aufweisen.

Dasselbe gilt für die Registrierung der Empfangslichtimpulse am Empfänger. Deren Umsetzung in elektrische Empfangssignale sowie deren Verstärkung ist mit Verzögerungszeiten behaftet, die gleichermaßen durch Störeinflüsse bedingten Schwankungen unterworfen sind.

Bei der Ermittlung der Laufzeiten tₒ zur Distanzbestimmung von Objekten im Überwachungsbereich sowie der Ermittlung der Laufzeiten t_{R} bei der Referenzmessung sind den Distanzmesswerten dieselben schwankungsbehafteten Verzögerungszeiten überlagert. Diese störbehafteten Verzögerungszeiten werden bei der Bildung der Laufzeitdifferenz tₒ - t_{R} eliminiert, wodurch die Genauigkeit und Reproduzierbarkeit der Distanzmessung erheblich gesteigert wird.

Dabei ist insbesondere vorbildhaft, dass die Referenzierung der Distanzmessung fortlaufend für sämtliche in den Überwachungsbereich geführten Sendelichtimpulse durchgeführt wird.

Besonders vorteilhaft hierbei ist, dass die Auskopplung des Referenz-Sendelichtimpulses den nutzbaren Überwachungsbereich nicht einschränkt.

Ist die Umlenkeinheit beispielsweise von einem Umlenkspiegel gebildet, der die Sendelichtimpulse periodisch innerhalb eines Vollkreises im Winkelbereich von 0° bis 360° führt, so braucht für die Referenzmessung kein separater Winkelbereich ausgespart werden. Vielmehr steht der volle von den Sendelichtimpulsen überstrichene Winkelbereich für eine Objekterfassung zur Verfügung.

Ein weiterer wesentlicher Vorteil der erfindungsgemäßen Vorrichtung ist darin zu sehen, dass durch die kontinuierliche Referenzierung der Objekterfassung mittels der mit den Referenz-Sendelichtimpulsen durchgeführten Referenzmessungen die Distanzmessung innerhalb des gesamten Überwachungsbereichs kontinuierlich überwacht wird.

Damit können die Anforderungen für den Einsatz der optoelektronischen Vorrichtung für den Einsatz im Bereich der Sicherheitstechnik und des Personenschutzes auf einfache Weise erfüllt werden. Besonders vorteilhaft hierbei ist, dass durch die erfindungsgemäßen Referenzmessungen auf einen mehrkanaligen Aufbau der Komponenten zur Bestimmung der Laufzeitdifferenzen verzichtet werden kann.

Die Erfindung wird im nachstehenden anhand der Zeichnungen erläutert. Es zeigen:
- Figur 1:: Längsschnitt durch die erfindungsgemäße optoelektronische Vorrichtung.
- Figur 2:: Querschnitt durch die optoelektronische Vorrichtung gemäß Figur 1.
- Figur 3:: Längsschnitt durch das Austrittsfenster der Vorrichtung gemäß Figuren 1 und 2 mit einer Reflexionsfläche zur Auskopplung eines Referenz-Sendelichtimpulses.
- Figur 4:: Erstes Diagramm zur Auswertung der Laufzeiten der Sendelichtimpulse und Referenz-Sendelichtimpulse der Vorrichtung gemäß Figuren 1 - 3.
- Figur 5:: Zweites Diagramm zur Auswertung der Laufzeiten der Sendelichtimpulse und Referenz-Sendelichtimpulse der Vorrichtung gemäß Figuren 1 - 3.

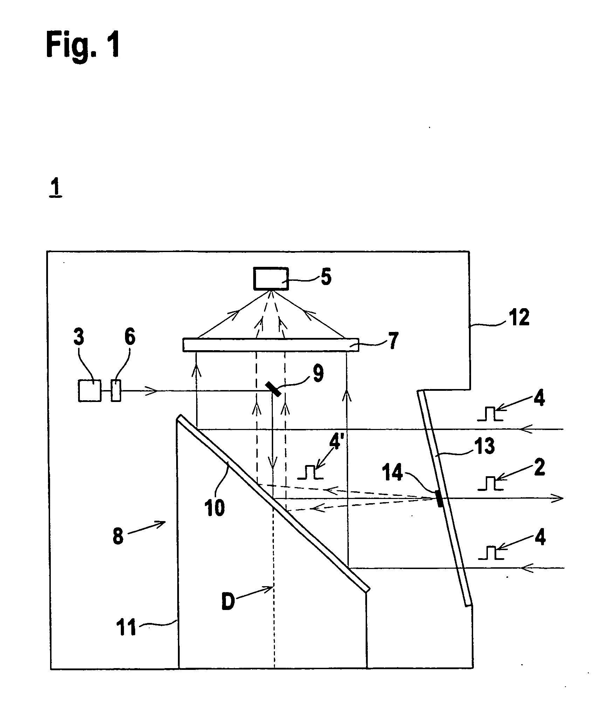

In Figur 1 ist schematisch der Aufbau eines Ausführungsbeispiels der erfindungsgemäßen optoelektronischen Vorrichtung 1 zur Erfassung von Objekten in einem Überwachungsbereich dargestellt. Als Objekte im Überwachungsbereich werden neben Gegenständen insbesondere auch in den Überwachungsbereich eindringende Personen erfasst.

Die optoelektronische Vorrichtung 1 weist einen nach dem Impulslaufzeitverfahren arbeitenden Distanzsensor mit einem Sendelichtimpulse 2 emittierenden Sender 3 und einen Empfangslichtimpulse 4 empfangenden Empfänger 5 auf. Der Sender 3 ist beispielsweise von einer Laserdiode gebildet. Als Empfänger 5 ist eine Photodiode oder dergleichen vorgesehen.

Dem Sender 3 ist zur Strahlformung der Sendelichtimpulse 2 eine Sendeoptik 6 nachgeordnet. Zur Fokussierung der Empfangslichtimpulse 4 auf den Empfänger 5 ist diesem eine Empfangsoptik 7 vorgeordnet. Der Sender 3 und der Empfänger 5 sind an eine nicht dargestellte Auswerteeinheit angeschlossen, die von einem Mikroprozessor oder dergleichen gebildet ist.

Zur Bestimmung der Distanzen von Objekten im Überwachungsbereich wird die Laufzeit tₒ der auf ein Objekt geführten und als Empfangslichtimpulse 4 zurück zum Empfänger 5 reflektierten Empfangslichtimpulsen 4 bestimmt. Aus den Laufzeiten werden in der Auswerteeinheit die entsprechenden Distanzwerte berechnet.

Die Sendelichtimpulse 2 und die von einem Objekt zurück zur Vorrichtung 1 reflektierten Empfangslichtimpulse 4 sind über eine Ablenkeinheit 8 geführt. Im vorliegenden Ausführungsbeispiel sind die Sendelichtimpulse 2 über einen stationären Spiegel 9 auf die Ablenkeinheit 8 geführt. Die Ablenkeinheit 8 besteht im vorliegenden Beispiel aus einem Umlenkspiegel 10, der auf einem um eine in vertikaler Richtung verlaufende Drehachse D drehbaren Sockel 11 aufsitzt. Der Sockel 11 wird mittels eines nicht dargestellten Motors in eine Drehbewegung mit konstanter Drehzahl versetzt. Sowohl die vom Sender 3 emittierten Sendelichtimpulse 2 als auch die von einem Objekt reflektierten Empfangslichtimpulse 4 sind über den Umlenkspiegel 10 geführt. Prinzipiell kann die Ablenkeinheit 8 auch mehrere Umlenkspiegel 10 aufweisen, wobei insbesondere die Sendelichtimpulse 2 und Empfangslichtimpulse 4 über separate Umlenkspiegel 10 geführt sein können.

Die optoelektronische Vorrichtung 1 ist in einem Gehäuse 12 integriert, welches an seiner Frontseite ein Austrittsfenster 13 aufweist, durch welches die Sendelichtimpulse 2 in den Überwachungsbereich geführt sind und durch welches die Empfangslichtimpulse 4 zurück zur Vorrichtung 1 geführt sind.

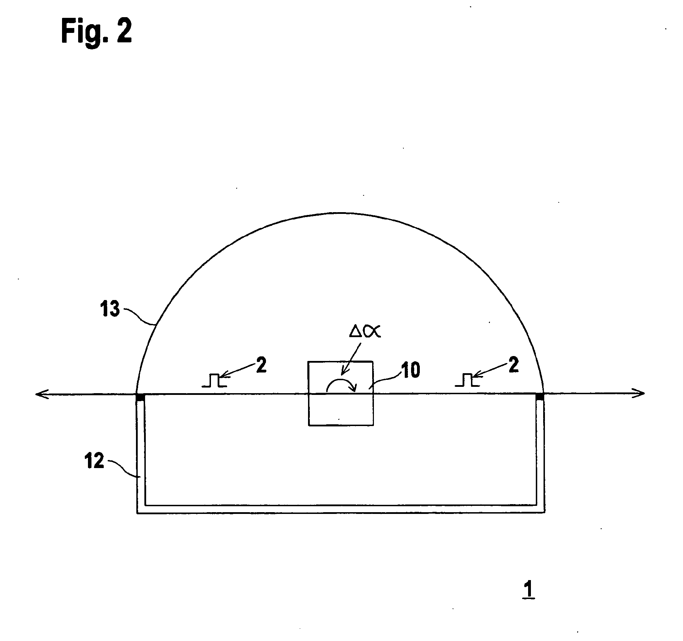

Wie aus Figur 2 ersichtlich verläuft das Austrittsfenster 13 in Umfangsrichtung des Gehäuses 12 längs eines Kreisbogens und erstreckt sich über einen Winkelbereich von Δα = 180°. Die an der Ablenkeinheit 8 abgelenkten Sendelichtimpulse 2 sind periodisch innerhalb des vollen Winkelbereichs von 360° geführt.

Dabei sind die Sendelichtimpulse 2 innerhalb des Winkelbereiches Δα zwischen 0° und 180° durch das Austrittsfenster 13 in den in einer horizontalen Ebene liegenden Überwachungsbereich geführt. Innerhalb des Winkelbereichs zwischen 180° und 360° sind die Sendelichtimpulse 2 dagegen im Innern des Gehäuses 12 geführt.

Erfindungsgemäß wird von jedem Sendelichtimpuls 2 ein Teil der Lichtmenge als Referenz-Sendelichtimpuls 2' ausgekoppelt, der für eine Referenzmessung verwendet wird. Hierzu wird der Referenz-Sendelichtimpuls 2' als Referenz-Empfangslichtimpuls 4' zurück zum Empfänger 5 geführt.

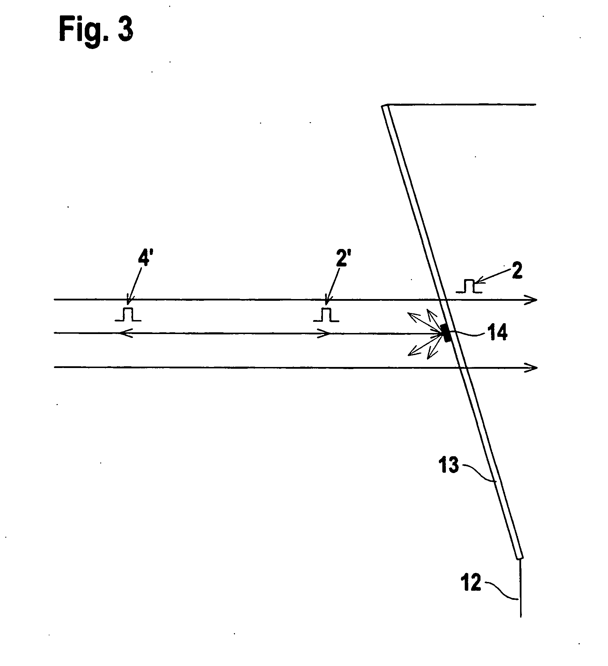

Ein Beispiel einer derartigen Auskopplung eines Referenz-Sendelichtimpulses 2' ist in Figur 3 dargestellt. Hierzu ist im Zentrum des Austrittsfensters 13 eine Reflexionsfläche 14 vorgesehen. Die Breite der Reflexionsfläche 14 ist erheblich kleiner als der Strahldurchmesser der Sendelichtimpulse 2. Die Reflexionsfläche 14 erstreckt sich in Umfangsrichtung über die gesamte Länge des Austrittsfensters 13. Die Reflexionsfläche 14 ist beispielsweise von der Oberfläche einer auf die Innenseite des Austrittsfensters 13 aufgebrachten Beschichtung gebildet. Alternativ kann zur Herstellung der Reflexionsfläche 14 das Austrittsfenster 13 lokal aufgeraut sein. In jedem Fall wird der auf die Reflexionsfläche 14 auftreffende Teil eines Sendelichtimpulses 2 diffus reflektiert und über die Ablenkeinheit 8 zum Empfänger 5 geführt. Da sich die Reflexionsfläche 14 über die gesamte Länge des Austrittsfensters 13 erstreckt, wird in jeder Winkelposition der Ablenkeinheit 8 derselbe Anteil eines Sendelichtimpulses 2 durch Reflexion von der Reflexionsfläche 14 ausgekoppelt und als Referenz-Empfangslichtimpuls 4' zum Empfänger 5 geführt.

Prinzipiell können die Referenz-Sendelichtimpulse 2' auch über einen nicht dargestellten Lichtwellenleiter oder dergleichen vom Sender 3 zum Empfänger 5 geführt sein. Der beispielsweise als Lichtleitfaser ausgebildete Lichtwellenleiter weist hierzu eine dem Sender 3 nachgeordnete Lichteintrittsfläche auf, über welche ein definierter Teil der Lichtmenge eines Sendelichtimpulses 2 in der Lichtwellenleiter eingekoppelt wird. Vorteilhaft hierbei ist, dass der Referenz-Sendelichtimpuls 2' nicht über die Ablenkeinheit 8 geführt werden muss und direkt vom Sender 3 zum Empfänger 5 geführt wird.

In jedem Fall sind die Referenz-Sendelichtimpulse 2' vollständig innerhalb des Gehäuses 12 geführt, wobei die Referenzstrecke, die ein Referenz-Sendelichtimpuls 2' vom Sender 3 bis zum Empfänger 5 zurücklegt, bekannt ist und als Parameter in der Auswerteeinheit abgespeichert ist.

Erfindungsgemäß wird zur Distanzbestimmung von Objekten im Überwachungsbereich nicht unmittelbar die Laufzeit tₒ der Sendelichtimpulse 2 sondern die Laufzeitdifferenz tₒ - t_{R} eines Sendelichtimpulses 2 sowie des jeweils zugehörigen Referenz-Sendelichtimpulses 2' ausgewertet. Bei bekanntem Lichtweg des Referenz-Sendelichtimpulses 2' kann dann aus dieser Laufzeitdifferenz in der Auswerteeinheit die Objektdistanz bestimmt werden.

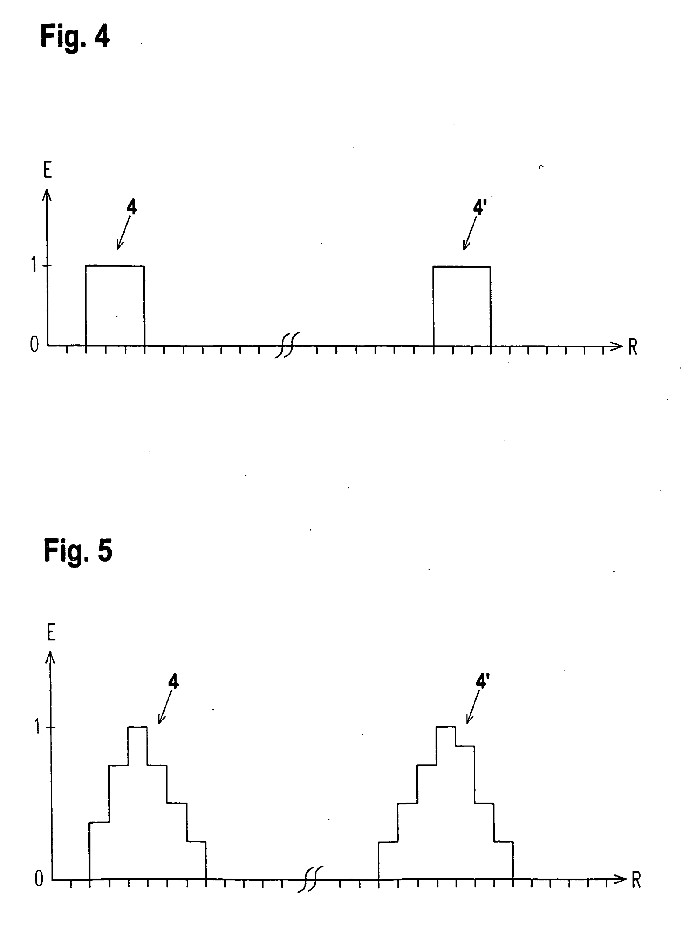

In den Figuren 4 und 5 sind zwei Ausführungsbeispiele zur Auswertung der Laufzeitdifferenzen tₒ - t_{R} in jeweils einem Diagramm schematisch dargestellt.

In beiden Fällen werden die durch die am Empfänger 5 auftreffenden Empfangslichtimpulse 4 bzw. Referenz-Empfangslichtimpulse 4' generierten analogen Empfangssignal quantisiert. Die dem zeitlichen Verlauf des Empfangssignals entsprechende quantisierte Empfangssignalfolge E wird dann in die einzelnen Register R eines nicht dargestellten Speicherelements eingelesen. Das Speicherelement kann von einem Halbleiterspeicher oder einem CCD Array gebildet sein.

Wie in den Figuren 4 und 5 dargestellt wird jeweils die einen Empfangslichtimpuls 4 und den zugehörigen Referenz-Empfangslichtimpulsen 4' enthaltende Empfangssignalfolge E in die Register R des Speicherelementes eingelesen. Die in den einzelnen Registern R abgespeicherten Signalwerte der quantisierten Empfangssignalfolge E werden mittels eines Oszillatortakts taktweise ausgelesen und in der Auswerteeinheit ausgewertet. Zur Bestimmung der Laufzeitdifferenz tₒ -t_{R} werden die die Lagen des Empfangslichtimpulses 4 bzw. des Referenz-Empfangslichtimpulses 4' definierenden Registerpositionen bestimmt. Die Differenz der Registerpositionen des Empfangslichtimpulses 4 sowie des zugehörigen Referenz-Empfangslichtimpulses 4' ergeben bei bekannter Taktrate, mit der die Empfangssignalfolge E in die Register R eingelesen werden, die Laufzeitdifferenz tₒ - t_{R}.

Figur 4 zeigt eine erste Ausführungsform einer derartigen Auswertung. In diesem Fall wird das analoge Empfangssignal mittels einer nicht dargestellten Schwellwerteinheit in eine binäre Signalfolge gewandelt. Bei Vorhandensein eines Empfangslichtimpulses 4 oder eines Referenz-Empfangslichtimpulses 4' nimmt die auf diese Weise quantisierte Empfangssignalfolge E den Wert 1 ein, während dieses ansonsten den Wert 0 annimmt. Die die Lage des Empfangslichtimpulses 4 oder Referenz-Empfangslichtimpulses 4' definierende Registerposition ist vorzugsweise jeweils durch das Zentrum des jeweiligen Empfangslichtimpulses 4 oder Referenz-Empfangslichtimpulses 4' vorgegeben.

Figur 5 zeigt eine zweite Ausführungsform einer derartigen Auswertung. In diesem Fall wird das analoge Empfangssignal mittels eines ebenfalls nicht dargestellten Analog-Digital-Wandlers quantisiert. Entsprechend der Wortbreite n des Analog-Digital-Wandlers wird die Amplitude des analogen Empfangssignals auf 2ⁿ diskrete Amplitudenwerte der quantisierten Empfangssignalfolge E abgebildet. Vorzugsweise wird ein Analog-Digital-Wandler mit einer Wortbreite von n = 8 verwendet.

Figur 5 zeigt schematisch die mit dem Analog-Digital-Wandler erzeugten, in diskreten Stufen verlaufenden Amplitudenverläufe der Empfangssignalfolge E mit einem Empfangslichtimpuls 4 und einem zugehörigen Referenz-Empfangslichtimpuls 4'.

Zur Bestimmung der Laufzeitdifferenzen tₒ - t_{R} werden entweder die Lagen der Maxima oder die Lagen der Schwerpunkte des Empfangslichtimpulses 4 und des Referenz-Empfangslichtimpulses 4' bestimmt. Die Differenzen der entsprechenden Registerpositionen liefern wiederum die Laufzeitdifferenz tₒ - t_{R}.

Da durch die Quantisierung des analogen Empfangssignals mittels eines Analog-Digital-Wandlers mit hinreichend großer Wortbreite ein weitaus detaillierterer Verlauf der Amplituden der Empfangslichtimpulse 4 und Referenz-Empfangslichtimpulse 4' erhalten wird, als dies bei Verwendung einer Schwellwerteinheit möglich ist, ist diese Art der Bestimmung der Laufzeitdifferenz erheblich genauer.

Alternativ kann zur Ermittlung der Laufzeitdifferenz tₒ - t_{R} ein nicht dargestellter Zeitmessbaustein verwendet werden. Dabei werden im Empfangslichtimpuls 4 und ein diesem zugeordneter Referenz-Empfangslichtimpuls 4' über separate Eingänge dieses Zeitmessbausteins eingelesen. Vorzugsweise sind diese beiden Eingänge von dem Start- und Stop-Eingang dieses Zeitmessbausteins gebildet.

### Bezugszeichenliste

(1) Optoelektronische Vorrichtung
(2) Sendelichtimpuls
(2') Referenz-Sendelichtimpuls
(3) Sender
(4) Empfangslichtimpuls
(4') Referenz-Empfangslichtimpuls
(5) Empfänger
(6) Sendeoptik
(7) Empfangsoptik
(8) Ablenkeinheit
(9) Spiegel
(10) Umlenkspiegel
(11) Sockel
(12) Gehäuse
(13) Austrittsfenster
(14) Reflexionsfläche

## Patentansprüche

1. Optoelektronische Vorrichtung zur Erfassung von Objekten in einem Überwachungsbereich mit einem Sendelicht emittierenden Sender, einem Empfangslicht empfangenden Empfänger und mit einer Auswerteeinheit, in welcher zur Distanzbestimmung eines Objektes die Laufzeit tₒ des im Überwachungsbereich geführten und von dem Objekt als Empfangslicht zurückreflektierten Sendelichts ausgewertet wird, wobei der Sender (3) das Sendelicht in Form einer Folge von Sendelichtimpulsen (2) emittiert, und jeweils ein Teil der Lichtmenge eines Sendelichtimpulses (2) als Referenz-Sendelichtimpuls (2') ausgekoppelt und über eine ReferenzStrecke zum Empfänger (5) geführt ist, und wobei in der Auswerteeinheit die Laufzeit t_{R} des als Referenz-Empfangslichtimpuls (4') auf den Empfänger (5) geführten Referenz-Sendelichtimpulses (2') bestimmt wird und zur Distanzbestimmung eines Objektes die Laufzeitdifferenz tₒ - t_{R} herangezogen wird, **dadurch gekennzeichnet, dass** die Sendelichtimpulse (2) mittels einer Ablenkeinheit (8) periodisch innerhalb des Überwachungsbereichs geführt sind und für jede Ablenkposition der Ablenkeinheit (8) von einem in den Überwachungsbereich geführten Sendelichtimpuls (2) ein Referenz-Sendelichtimpuls (2') ausgekoppelt ist, dass die optoelektronische Vorrichtung in einem Gehäuse (12) integriert ist und die an der Ablenkeinheit (8) abgelenkten Sendelichtimpulse (2) über ein im Gehäuse (12) integriertes Austrittsfenster (13) in den Überwachungsbereich geführt sind, und dass am Austrittsfenster (13) eine Reflexionsfläche (14) angeordnet ist, an welcher jeweils ein Teil der Lichtmenge der Sendelichtimpulse (2) als Referenz-Sendelichtimpuls (2') zum Empfänger (5) reflektiert wird.

2. Optoelektronische Vorrichtung nach Anspruch 1, **dadurch gekennzeichnet, dass** die Referenz-Sendelichtimpulse (2') vollständig im Innern des Gehäuses (12) geführt sind.

3. Optoelektronische Vorrichtung nach einem der Ansprüche 1 oder 2, **dadurch gekennzeichnet, dass** zur Ermittlung der Laufzeitdifferenz tₒ - t_{R} zwischen einem von einem Objekt als Empfangslichtimpuls (4) zurückreflektierten Sendelichtimpuls (2) und einem Referenz-Empfangslichtimpuls (4') die Amplituden des am Ausgang des Empfängers (5) anstehenden analogen Empfangssignals quantisiert werden, dass die quantisierte Empfangssignalfolge in einem vorgegebenen Takt in die Register eines Speicherelements eingelesen wird, und dass zur Bestimmung der Laufzeitdifferenz die Differenz der Registerpositionen des Empfangslichtimpulses (4) und Referenz-Empfangslichtimpulses (4') bestimmt wird.

4. Optoelektronische Vorrichtung nach Anspruch 3, **dadurch gekennzeichnet, dass** die analogen Empfangssignale mittels einer Schwellwerteinheit in eine binäre Empfangssignalfolge gewandelt werden.

5. Optoelektronische Vorrichtung nach Anspruch 4, **dadurch gekennzeichnet, dass** die analogen Empfangssignale mittels eines eine Wortbreite von n-bit aufweisenden Analog-Digitalwandlers quantisiert werden.

6. Optoelektronische Vorrichtung nach Anspruch 5, **dadurch gekennzeichnet, dass** der Analog-Digitalwandler eine Wortbreite von 8 bit aufweist.

7. Optoelektronische Vorrichtung nach einem der Ansprüche 5 oder 6, **dadurch gekennzeichnet, dass** zur Ermittlung der Registerpositionen des Empfangslichtimpulses (4) und des Referenz-Empfangslichtimpulses (4') die Position des Maximums oder des Schwerpunkts des quantisierten Empfangslichtimpulses (4) bzw. Referenz-Empfangslichtimpulses (4') bestimmt wird.

8. Optoelektronische Vorrichtung nach einem der Ansprüche 3 bis 7, **dadurch gekennzeichnet, dass** das Speicherelement von einem Halbleiterspeicher oder CCD-Array gebildet ist.

9. Optoelektronische Vorrichtung nach einem der Ansprüche 1 oder 2, **dadurch gekennzeichnet, dass** zur Ermittlung der Laufzeitdifferenz tₒ - t_{R} ein Zeitmessbaustein vorgesehen ist, wobei ein Empfangslichtimpuls (4) und der zugehörige Referenz-Empfangslichtimpuls (4') über separate Eingänge des Zeitmessbausteins eingelesen werden.

10. Optoelektronische Vorrichtung nach Anspruch 9, **dadurch gekennzeichnet, dass** die Eingänge des Zeitmessbausteins von einem Start- und einem Stop-Eingang gebildet sind.

11. Optoelektronische Vorrichtung nach einem der Ansprüche 1 bis 10, **dadurch gekennzeichnet, dass** diese als Sicherheitsvorrichtung im Bereich des Personenschutzes einsetzbar ist, wobei die Komponenten zur Bestimmung der Laufzeitdifferenz tₒ - t_{R} einen einkanaligen Aufbau aufweisen.

## Claims

1. Opto-electronic device for detecting objects in a monitoring region, comprising a transmitter emitting a transmitted light, a receiver receiving received light and an evaluating unit in which for distance determination of an object the transit time tₒ of the transmitted light conducted into the monitoring region and reflected back from the object as received light is evaluated, wherein the transmitter (3) emits the transmitted light in the form of a train of transmitted light pulses (2) and in each instance a part of the quantity of light of a transmitted light pulse (2) is coupled out as a reference transmitted light pulse (2') and is conducted by way of a reference path to the receiver (5), and wherein the transit time t_{R} of the reference transmitted light (2') conducted as reference received light pulse (4') to the receiver (5) is determined in the evaluating unit and the transit time difference tₒ - t_{R} is utilised for distance determination of an object, **characterised in that** the transmitted light pulse (2) is periodically conducted by means of a deflecting unit (8) within the monitoring region, and for each deflecting position of the deflecting unit (8) a reference transmitted light pulse (2') is coupled out of a transmitted light pulse (2) conducted into the monitoring region, that the opto-electronic device is integrated in a housing (12) and the transmitted light pulses (2) deflected at the deflecting unit (8) are conducted into the monitoring region by way of an outlet window (13) integrated in the housing (12), and that a reflection surface (14) at which a respective part of the light quantity of the transmitted light pulses (2) is reflected as reference transmitted light pulse (2') to the receiver (5) is arranged at the outlet window (13).

2. Opto-electronic device according to claim 1, **characterised in that** the reference transmitted light pulses (2') are conducted entirely in the interior of the housing (12).

3. Opto-electronic device according to one of claims 1 and 2, **characterised in that** the amplitudes of the analog received signals present at the output of the receiver (4) are quantised for determination of the transit time difference tₒ - t_{R} between a transmitted light pulse (2), which is reflected back by an object as received light pulse (4), and a reference received light pulse (4'), that the quantised received signal train is read at a predetermined cycle into the register of a memory element and that the difference of the register positions of the received light pulse (4) and reference received light pulse (4') is determined for determination of the transit time difference.

4. Opto-electronic device according to claim 3, **characterised in that** the analog received signals are converted by means of a threshold value unit into a binary received signal train.

5. Opto-electronic device according to claim 4, **characterised in that** the analog received signals are quantised by means of a word width of an analog/digital converter having n bits.

6. Opto-electronic device according to claim 5, **characterised in that** the analog/digital converter has a word width of 8 bits.

7. Opto-electronic device according to one of claims 5 and 6, **characterised in that** the position of the maximum or of the centre of gravity of the quantised received light pulse (4) or reference received light pulse (4') is determined for determination of the register positions of the received light pulse (4) and the reference received light pulse (4').

8. Opto-electronic device according to one of claims 3 to 7, **characterised in that** the memory unit is formed by a semiconductor memory or CCD array.

9. Opto-electronic device according to one of claims 1 and 2, **characterised in that** a time measuring block is provided for determination of the transit time difference tₒ - t_{R}, wherein a received light pulse (4) and the associated references received light pulse (4') are read in by way of separate inputs of the time measuring block.

10. Opto-electronic device according to claim 9, **characterised in that** the inputs of the time measuring block are formed by a start input and a stop input.

11. Opto-electronic device according to one of claims 1 to 10, **characterised in that** this is usable as a safety device in the realm of protection of persons, wherein the components for determination of the transit time difference tₒ - t_{R} have a single-channel construction.

## Revendications

1. Dispositif optoélectronique pour la saisie ou la détection d'objets dans une zone à surveiller, avec un émetteur émettant une lumière d'émission, un récepteur recevant une lumière de réception et avec une unité d'évaluation dans laquelle, pour déterminer la distance d'un objet, on évalue le temps de parcours tₒ de la lumière d'émission guidée dans la zone à surveiller et réfléchie par l'objet en tant que lumière de réception, l'émetteur (3) émettant la lumière d'émission sous la forme d'une suite d'impulsions de lumière d'émission (2) et une partie de la quantité de lumière de chaque impulsion de lumière d'émission (2) étant découplée en tant qu'impulsion de lumière d'émission de référence (2') et guidée vers le récepteur (5) par l'intermédiaire d'une section de référence, et le temps de parcours t_{R} de l'impulsion de lumière d'émission de référence (2') guidée sur le récepteur (5) en tant qu'impulsion de lumière de réception de référence (4') étant déterminé dans l'unité d'évaluation et la différence de temps de parcours tₒ - t_{R} étant utilisé pour déterminer la distance de l'objet, **caractérisé en ce que** les impulsions de lumière d'émission (2) sont guidées périodiquement à l'intérieur de la zone à surveiller au moyen d'une unité de déviation (8) et, pour chaque position de déviation de l'unité de déviation (8), une impulsion de lumière d'émission de référence (2') est découplée d'une impulsion de lumière d'émission (2) guidée dans la zone à surveiller, que le dispositif optoélectronique est intégré dans un boîtier (12) et les impulsions de lumière d'émission (2) déviées sur l'unité de déviation (8) sont guidées dans la zone à surveiller par l'intermédiaire d'une fenêtre de sortie (13) intégrée dans le boîtier (12), et que sur la fenêtre de sortie (13) est disposée une surface de réflexion (14) sur laquelle une partie de la quantité de lumière de chaque impulsion de lumière d'émission (2) est réfléchie en tant qu'impulsion de lumière d'émission de référence (2') vers le récepteur (5).

2. Dispositif optoélectronique selon la revendication 1, **caractérisé en ce que** les impulsions de lumière d'émission de référence (2') sont entièrement guidées à l'intérieur du boîtier (12).

3. Dispositif optoélectronique selon l'une des revendications 1 ou 2, **caractérisé en ce que** pour déterminer la différence de temps de parcours tₒ - t_{R} entre une impulsion de lumière d'émission (2) réfléchie par un objet en tant qu'impulsion de lumière de réception (4) et une impulsion de lumière de réception de référence (4'), on quantifie les amplitudes du signal de réception analogique présent à la sortie du récepteur (5), que la suite de signaux de réception quantifiés est chargée à une cadence prédéfinie dans les registres d'un élément de mémorisation, et que pour déterminer la différence de temps de parcours, on détermine la différence des positions de registre de l'impulsion de lumière de réception (4) et de l'impulsion de lumière de réception de référence (4').

4. Dispositif optoélectronique selon la revendication 3, **caractérisé en ce que** les signaux de réception analogiques sont convertis en une suite de signaux de réception binaire au moyen d'une unité à valeur seuil.

5. Dispositif optoélectronique selon la revendication 4, **caractérisé en ce que** les signaux de réception analogiques sont quantifiés au moyen d'un convertisseur analogique-numérique présentant une largeur de mot de n bits.

6. Dispositif optoélectronique selon la revendication 5, **caractérisé en ce que** le convertisseur analogique-numérique présente une largeur de mot de 8 bits.

7. Dispositif optoélectronique selon l'une des revendications 5 ou 6, **caractérisé en ce que** pour déterminer les positions de registre de l'impulsion de lumière de réception (4) et de l'impulsion de lumière de réception de référence (4'), on détermine la position du maximum ou du barycentre de l'impulsion de lumière de réception (4) ou de l'impulsion de lumière de réception de référence (4') quantifiée.

8. Dispositif optoélectronique selon l'une des revendications 3 à 7, **caractérisé en ce que** l'élément de mémorisation est formé par une mémoire à semi-conducteurs ou un réseau CCD.

9. Dispositif optoélectronique selon l'une des revendications 1 ou 2, **caractérisé en ce que** pour déterminer la différence de temps de parcours tₒ - t_{R}, il est prévu un composant de mesure du temps, une impulsion de lumière de réception (4) et l'impulsion de lumière de réception de référence (4') associée étant chargées via des entrées séparées du composant de mesure du temps.

10. Dispositif optoélectronique selon la revendication 9, **caractérisé en ce que** les entrées du composant de mesure du temps sont formées par une entrée de déclenchement et une entrée d'arrêt.

11. Dispositif optoélectronique selon l'une des revendications 1 à 10, **caractérisé en ce que** celui-ci est utilisable comme dispositif de sécurité dans le domaine de la protection des personnes, les composants pour déterminer la différence de temps de parcours tₒ - t_{R} présentant une structure à un canal.
